# EUROPÄISCHE PATENTSCHRIFT

(11) **EP 0 593 932 B1**
(45) Veröffentlichungstag und Bekanntmachung des Hinweises auf die Patenterteilung: **10.04.1996**
(21) Anmeldenummer: 93115397.7
(22) Anmeldetag: 24.09.1993
(51) Int. Cl.: B23P 15/00, B23K 37/047, B62D 65/00

(54) **Verfahren zum Herstellen geschweisster Stahlblechplatinen**
Method for manufacturing welded sheet steel plates
Procédé pour fabriquer des plaques de tôles en acier soudées

(30) Priorität: 17.10.1992 DE 4235110
(43) Veröffentlichungstag der Anmeldung: 27.04.1994
(73) Patentinhaber: Hoesch Platinen GmbH, D-44145 Dortmund (DE)
(72) Erfinder: Braun, Heinrich, Dipl.-Ing., D-44652 Herne (DE); Tenhaven, Ulrich, Dr. Ing., D-44229 Dortmund (DE)

(56) Entgegenhaltungen:
- EP-A- 0 234 346
- EP-A- 0 438 612
- DE-C- 4 022 062
- US-A- 4 988 845
- PATENT ABSTRACTS OF JAPAN vol. 9, no. 94 (M-374)24. April 1985 & JP-A-59 220 229 (TOYOTA) 11. Dezember 1984
- THYSSEN TECHNISCHE BERICHTE Bd. 24, Nr. 1 , Januar 1992 Seiten 97 - 106 C.SCHNEIDER ET AL '"Tailored blanks" - ein Werkstoff für neue Formen der Konstruktion'

## Beschreibung

Die Erfindung betrifft ein Verfahren zum Herstellen geschweißter Stahlblechplatinen nach dem Oberbegriff des Anspruchs 1.

Derartige Stahlblechplatinen werden z. B. in der Automobilindustrie für die Herstellung von Preß- und/oder Abkantteilen, die als Karrosserieteile dienen, verwendet, da diese Teile in ihrem Verlauf unterschiedlichen Belastungen ausgesetzt sind.

Es ist z. B. aus "Thyssen Technische Berichte", 24 (1992), Heft 1, Seiten 97 ff., bekannt, Stahlblechplatinen aus Zuschnitten unterschiedlicher Formen, Blechdicken, Stahlwerkstoffen und Beschichtungen dadurch herzustellen, daß die Zuschnitte mit fertigen Endabmessungen zuerst durch Schneiden und/oder Stanzen aus Stahlblechen oder Bändern hergestellt werden, dann durch Widerstand-Quetschnahtschweißen oder Laserschweißen an jeweils einer Kante miteinander verbunden werden.

Im einzelnen werden dazu zunächst Stahlbänder geeigneter Breite durch Längsteilen oder Besäumen hergestellt. Das Herstellen der Blechzuschnitte aus diesen Stahlbändern erfolgt durch Querteilen oder Ausstanzen. Bereits in dieser frühen Stufe des Fertigungsprozesses werden die endgültigen Fertigabmessungen des Produktes erstellt. Danach werden die in geeigneten Transportbehältern abgestapelten Blechzuschnitte einer Schweißmaschine zugeführt, ausgerichtet und gespannt, einschl. evtl. erforderlicher Schweißkantenbearbeitung. Das verschweißen der Blechzuschnitte geschieht durch Laserschweißen oder Quetschnahtschweißen.

Nach dem Glätten der Quetschnaht mit nachgeschaltetem Rollenpaar wird die geschweißte Platine weitertransportiert und die Schweißnaht gebürstet, wonach evtl. noch Abstandssicken in die Schweißplatine geprägt und die Schweißnaht eingeölt werden, bevor sie bei Bedarf gewendet und abgestapelt wird.

Diese Fertigungsweise hat den Vorteil, daß bei der Herstellung der Einzelzuschnitte, die zur geschweißten Platine zusammengeführt werden sollen, in der Regel eine gute Materialausnutzung erreicht werden kann. Weiterhin ist von Vorteil, daß bei dieser Fertigungsweise keine aufwendigen Bandanlagen mit Haspel, Abzugsvorrichtung, Richtmaschine, Treibern, Bandvorrat-Schlingengruben und Bandzugaggregaten verwendet werden müssen. Jedoch sind mit dieser Fertigung auch eine Reihe von Schwierigkeiten verbunden, die nur durch einen hohen Kontrollaufwand überwunden werden können, um einen sicheren Fertigungsablauf zu erreichen.

Hierzu gehört, daß die zu verschweißenden Blechzuschnitte mit sehr geringen Toleranzen in der Blechebene und senkrecht zur Blechebene positioniert und eingespannt werden müssen, um nach dem Verschweißen die vorgesehene Form der Schweißplatine zu erhalten, ohne daß ein Versatz der verschweißten Zuschnitte auftritt. Dies erfordert eine ständige Kontrolle der dafür eingesetzten Positionier- und Spannvorrichtungen. Außerdem verlängern diese Nebentätigkeiten die Taktzeit des eigentlichen Schweißprozesses.

Weiterhin bedingt diese Fertigungsweise, daß zur Herstellung gleichbleibender Verarbeitungs- und Gebrauchseigenschaften der Schweißzone längs und quer zur Schweißnaht hohe Aufwendungen für die Kontrolle und Steuerung der Schweißparameter am Anfang der Schweißnaht entsprechend dem Beginn des Schweißvorganges und am Ende der Schweißnaht entsprechend der Beendigung des Schweißvorganges erforderlich sind. Ein wesentliches Merkmal dieser Fertigung ist außerdem, daß die kritischen Schweißzonen am Anfang und Ende einer Naht in jeder Schweißplatine vorhanden sind.

Eine wesentliche Eigenart der Einzelfertigung geschweißter Blechplatinen ist außerdem, daß die zu verschweißenden Blechzuschnitte und die geschweißte Blechplatine schrittweise den dem Schweißprozeß vor- und nachgeschalteten Bearbeitungsschritten zugeführt wird. Hierbei muß für jeden Transportvorgang eine Mindesttaktzeit von 12 Sekunden, die durch die Beschleunigung und Abbremsung der bewegten Massen bestimmt wird, zugrunde gelegt werden.

Bei Schweißplatinen mit kurzen Schweißnähten wird daher die Fertigungszeit nicht mehr durch die Schweißgeschwindigkeit, sondern durch die längere Taktzeit der Transportvorgänge bestimmt. Dies führt dazu, daß die Fertigung von Schweißplatinen aus einzelnen Blechzuschnitten häufig nicht mit optimalen Schweißprozeßbedingungen und der wirtschaftlich wünschenswerten, nur von der Schweißtechnik beeinflußten Fertigungsgeschwindigkeit durchgeführt werden kann. Ein weiterer Nachteil besteht darin, daß die Festlegung der Produktfertigabmessungen durch Schneiden/Stanzen zu Beginn der Fertigungskette erfolgt. Hierdurch besteht die erhöhte Gefahr der Kantenbeschädigungen der Zuschnitte während der nachfolgenden Lagerungen und Transporte, die bei Auftreten an den zu verschweißenden Blechkanten zu erhöhten Schweißausschußzahlen führen.

Es wurde daher schon früh überlegt, diesen Mängeln abzuhelfen, mit dem Ergebnis, daß vorgeschlagen wird, zunächst die Teile der Schweißplatine mit unterschiedlicher Blechdicke, aus unterschiedlichen Werkstoffen oder mit unterschiedlichen Beschichtungen als Stahlbänder kontinuierlich parallel zusammenzuführen, die Stoßkanten der Stahlbänder miteinander zu verschweißen und anschließend durch Schneiden oder Stanzen aus dem Verbundstahlband die gewünschten Platinen herauszutrennen, vgl. dazu die DE-PS 40 22 062 (nächstliegender Stand der Technik) sowie die GB-PS 1 398 904.

Derartige Verfahren bieten den Vorteil, daß einige der zur Herstellung von Schweißplatinen aus einzelnen Blechzuschnitten oben aufgeführten Arbeitsschritte entfallen und Stahlbänder geeigneter Breite nach dem Richten und Vorbereiten der Kanten direkt kontinuierlich dem Schweißvorgang zugeführt werden. Die Bearbeitungsschritte wie Schweißen, Schweißnahtbürsten, Prägen der Abstandssicken, Einölen können kontinuierlich am Verbundband ausgeführt werden. Anschließend wird die Platine aus dem Verbundband herausgetrennt und abgestapelt.

Bei diesem Verfahren werden die aufwendigen Schritte der Herstellung und Bevorratung der einzelnen Blechzuschnitte vermieden. Weiterhin wird durch die unmittelbar vor dem Schweißvorgang durchgeführte Bearbeitung der zu verschweißenden Bandkanten mit großer Sicherheit vermieden, daß beschädigte Blechkanten verschweißt werden, was die Schweißplatine unbrauchbar machen würde. Da das Schweißen kontinuierlich erfolgt, erhält man als weiteren Vorteil, daß über die Schweißnahtlänge der später herausgetrennten Schweißplatine sehr gleichmäßige Verarbeitungs- und Gebrauchseigenschaften der Schweißzone eingestellt werden können.

Weiterhin ist vorteilhaft, daß mit Ausnahme des Abstapelns der herausgetrennten Platinen am Schluß der Bearbeitungslinie alle Vorgänge in Anpassung an die Schweißgeschwindigkeit durchgeführt werden können. Hierdurch können insbesondere bei Schweißplatinen mit kurzer Schweißnaht im Vergleich zur Fertigung aus einzelnen Blechzuschnitten erheblich kürzere Fertigungszeiten und damit wirtschaftliche Vorteile realisiert werden.

Das vorstehend beschriebene Verfahren zum kontinuierlichen Verschweißen von Bandkanten erfordert jedoch einen hohen maschinellen Aufwand zur Führung und Positionierung der Bandkanten, um eine einwandfreie Schweißnaht zu erreichen. Dies gilt sowohl für die Positionierung in der Blechebene in Längsrichtung der Bandkanten wie auch senkrecht dazu.

Beim Laserschweißen soll z. B. der Spalt zwischen den Bandkanten in dem bei Stahlfeinblech üblichen Dickenbereich 100 Mikrometer nicht überschreiten. Beim Quetschnahtschweißen darf die Überlappung der Bandkanten ebenfalls nur eine Toleranz im Bereich von max. 300 Mikrometer aufweisen.

Die vorgenannten, für einwandfreie Schweißnähte erforderlichen Toleranzen sind mit hohem mechanischen Aufwand und entsprechenden Prüfeinrichtungen zu erzielen, wenn die zu verschweißenden Bänder in Längsrichtung eine gerade Form haben, d. h. die Bandkanten geraden Linien folgen. Dies ist aber in der Regel bei warm- und/oder kaltgewalzten Stahlbändern nicht der Fall. Gewalzte Stahlbänder sind in der Regel in Längsrichtung nicht gerade, sondern beschreiben in der Blechebene einen Bogen, der auch als "Säbeligkeit" bezeichnet wird.

Die zulässigen Abweichungen von der Geradheit der Längskante sind in DIN 1541 angegeben. Danach reichen die Höchstwerte der zulässigen Abweichung von der Geradheit von 2 mm auf 1.000 mm Meßlänge für Bänder von ≧ 125 ≦ 600 mm Nennbreite bis zu 5 mm auf 2.500 mm Meßlänge für Bänder von ≧ 600 ≦ 2.000 mm Nennbreite. Beim Verschweißen von Bandkanten endloser Bänder ist daher immer mit dem Vorhandensein von Abweichungen von der Geradheit der Bandkanten zu rechnen.

Versuche und Berechnungen nach der Methode der finiten Elemente haben ergeben, daß durch Bandzugvorrichtungen diese Abweichungen von der Geradheit nicht zu beseitigen sind. Im Gegenteil wird bei aufgebrachten Zugspannungen in Längsrichtung des Bandes, die größer sind als die Streckgrenze des jeweiligen Bandwerkstoffes, das Band zwar durch plastische Verformung verlängert, die Abweichung von der Geradheit jedoch nicht beseitigt.

Versucht man andererseits, ungerade Bandkanten gegeneinander in Schweißposition zu zwingen, so äußert sich dies in Wellen, d. h. Unplanheiten der zu verschweißenden Bänder, so daß keine ebenen Schweißplatinen zu erreichen sind.

Von daher liegt der Erfindung die Aufgabe zugrunde, ein Verfahren zum Herstellen von geschweißten Stahlblechplatinen aus einzelnen von für die Platinenteile geeigneten Stahlbändern abgetrennten Blechtafeln zu finden, das die Vorteile der vorstehend beschriebenen Verfahren auf einfache Weise miteinander verbindet und die Nachteile der genannten Verfahren vermeidet.

Nach der Erfindung wird die Aufgabe in überraschender Weise durch die im kennzeichenden Teil des Anspruchs 1 angegebenen Merkmale gelöst.

Vorteilhafte Ausbildungen bzw. Weiterbildungen des erfindungsgemäßen Verfahrens sind im Anspruch 2 angegeben.

Die Herstellung der Blechtafeln kann so erfolgen, daß von einem Stahlblechcoil der erforderlichen Breite Band abgezogen, durch eine Rollenrichtmaschine geführt, durch eine Querteilschere die gewünschten Blechtafeln abgeschnitten und die Tafeln in Transportbehältern abgestapelt werden. Hervorzuheben ist hierbei, daß die so erzeugten Tafeln mit Längen gefertigt werden, die auch ein mehrfaches der Länge von auf üblichen Feinblech-Querteilanlagen herstellbaren Blechtafeln beträgt.

In der zweiten Bearbeitungsstufe werden die zu verschweißenden Blechkanten der hergestellten langen Blechtafeln mit einer Tafelschere so beschnitten, daß die Abweichungen von der Geradheit der Blechkanten beseitigt werden.

Die so vorbereitenden Blechtafeln werden nun einer Schweißmaschine zugeführt und mit der höchsten technisch möglichen Schweißgeschwindigkeit an den langen Kanten miteinander verschweißt. Hierbei kann das Verschweißen sowohl als Stumpfnahtschweißen mit einem energiereichen Stahl wie z. B. Laser- oder Elektronenstrahl als auch mit dem Quetschnahtschweißen als Überlappnahtschweißen ausgeführt werden. Hierbei werden die positionierten Bleche in dichter Folge unter dem Schweißaggregat, entweder dem energiereichen Strahl oder den Rollenelektroden durchgezogen bzw. durchgeschoben, so daß über die gesamte Blechtafellänge die Vorteile des kontinuierlichen Verschweißens von Blechkanten zum Tragen kommen.

Da die Blechtafeln endlicher Länge leicht zu führen sind, entfallen die für das Verschweißen der Kanten von endlosem Band erforderlichen aufwendigen maschinellen Einrichtungen.

Hinter dem Schweißaggregat werden in gleichem Fluß die Bearbeitungvorgänge Bürsten und Einölen der Schweißnaht angeordnet und durchgeführt. Anschließend werden die geschweißten Verbundtafeln in geeigneten Transportbehältern abgestapelt.

In der vierten Bearbeitungsstufe werden die Verbundtafeln einer Stanzpresse zugeführt. In dieser Bearbeitungsstufe werden aus den Verbundtafeln durch geeignete Schnittwerkzeuge die Platinen mit der gewünschten Form herausgetrennt und im gleichen Arbeitsgang die für das Abstapeln und die Weiterverarbeitung erforderlichen Abstandssicken zum Ausgleich der unterschiedlichen Blechdicken eingeprägt. Darüber hinaus können auch Identifizierungszahlen in die Platinen geprägt werden.

Die Vorteile des erfindungsgemäßen Verfahrens sind insbesondere in den höchsten Fertigungsgeschwindigkeiten bei geringem maschinellen Aufwand und auch geringem Steuerungsaufwand beim Schweißen bei hoher Prozeßsicherheit zu sehen.

In jeder der drei neuen Fertigungsstufen können die dort eingesetzten maschinellen Einrichtungen unabhängig voneinander und wirtschaftlich optimal ausgelegt werden. Somit ist es möglich, mit einer Anlage zur Herstellung langer Blechtafeln mehrere Schweißlinien zu bedienen, deren gesamte Produktionsmenge wiederum von nur einer Stanzlinie zum Endprodukt verarbeit wird. Außerdem ist eine schnelle Umstellung auf andere Platinenabmessungen und Werkstoffe möglich.

Eine genaue Einhaltung der Platinenform durch nachträgliches Heraustrennen aus der großen Verbundtafel am Ende des Fertigungsprozesses ist ebenfalls gewährleistet, wobei die kritischen Schweißbereiche am Nahtanfang und -ende nur bei jeder Großtafel auftreten. Durch den nachfolgenden Schnittvorgang werden diese entfernt, so daß die Fertigplatinen gleichmäßige Verarbeitungs- und Gebrauchseigenschaften der Schweißnaht aufweisen. Auch besteht keine Gefahr von Schweißausschuß in Folge von Kantenbeschädigung.

Das vorstehend beschriebene erfindungsgemäße Verfahren zum Herstellen von geschweißten Stahlblechplatinen vereint die Vorteile der Herstellung solcher Platinen durch Zusammenschweißen von Einzelzuschnitten der gewünschten Endabmessung und die Vorteile des kontinuierlichen Verschweißens der Kanten endloser Stahlbänder und anschließendem Heraustrennen der Stahlblechplatine. Gleichzeitig werden die Schwierigkeiten oder Nachteile der beschriebenen Verfahren vermieden.

## Patentansprüche

1. Verfahren zum Herstellen geschweißter Stahlblechplatinen aus einzelnen Von für die Platinenteile geeigneten Stahlbändern abgetrennten Blechtafeln, **dadurch gekennzeichnet,** daß Blechtafeln der mehrfachen Länge der Stahlblechplatinen von den Stahlbändern abgeteilt, an ihren Längskanten miteinander verschweißt und anschließend die einzelnen Stahlblechplatinen aus den aus den Blechtafeln entstandenen Verbundtafeln herausgetrennt werden, wobei die Blechtafeln vor dem Verschweißen an den zu verschweißenden Längskanten beschnitten werden.

2. Verfahren nach Anspruch 1, **dadurch gekennzeichnet,** daß die Längen der zu verschweißenden Blechtafeln das 3- bis 30-fache der Länge der einzelnen Stahlblechplatine betragen.

## Claims

1. Method for manufacturing welded sheet steel plates made from individual metal sheets separated from steel strips suitable for the plate parts, characterised in that metal sheets of multiple lengths of sheet steel plates are separated from the steel strips, welded to each other at their longitudinal edges and subsequently the individual sheet steel plates are separated from the composite sheets manufactured from the metal sheets, wherein prior to the welding process the metal plates are cut on the longitudinal edges to be welded.

2. Method according to claim 1, characterised in that the lengths of the metal sheets to be welded are 3 to 30 times the length of the individual sheet steel plates.

## Revendications

1. Procédé de fabrication de flans en tôle d'acier soudés à partir de plaques de tôle séparées, découpées hors de feuillards d'acier convenant pour des pièces de flan, caractérisé en ce que des plaques de tôle d'une longueur multiple de celle des flans de tôle d'acier sont découpées dans les feuillards de tôle, sont soudées ensemble le long de leurs bords longitudinaux, et les flans individuels de tôle d'acier sont ensuite découpés hors des plaques combinées formées des plaques de tôle, dans lequel les plaques de tôle sont ébarbées sur les bords longitudinaux a souder, avant le soudage.

2. Procédé selon la revendication 1, caractérisé en ce que les longueurs des plaques de tôle à souder valent de 3 à 30 fois la longueur des flans individuels de tôle d'acier à souder.
